# EUROPÄISCHE PATENTANMELDUNG

(11) **EP 2 792 653 A1**
(43) Veröffentlichungstag der Anmeldung: **22.10.2014**
(21) Anmeldenummer: 13164078.1
(22) Anmeldetag: 17.04.2013
(51) Int. Cl.: C04B 16/04, C08G 81/02, C09K 8/00, C08F 8/14, C04B 28/02, C08F 220/28

(54) **Verwendung von Kammpolymeren zur Kontrolle der Rheologie von mineralischen Bindemittelzusammensetzungen**

(71) Anmelder: Sika Technology AG, 6340 Baar (CH)
(72) Erfinder: Frunz, Lukas, 8057 Zürich (CH); Lorcet, Loic, 78970 Mézières sur Seine (FR); De Carvalho, Walter, 78980 Saint Illiers le bois (FR); Gueville, Julien, 76220 Gournay en bray (FR); Petriol, Pierre, 76000 Rouen (FR); Zimmermann, Jörg, 8400 Winterthur (CH)
(74) Vertreter: Sika Patent Attorneys

(57) **Zusammenfassung**

Ein Kammpolymers wird zur Erhöhung der Fliessgeschwindigkeit und/oder zur Reduktion der Viskosität einer mineralischen Bindemittelzusammensetzung verwendet, wobei das Kammpolymer eine Hauptkette umfassend Säuregruppen aufweist und an der Hauptkette Seitenketten angebunden sind, und wobei ein durchschnittliches zahlengemitteltes Molekulargewicht sämtlicher Seitenketten 120 - 1'000 g/mol beträgt, und ein Molverhältnis der Säuregruppen zu den Seitenketten im Bereich von 0.5 - 2 liegt.

## Beschreibung

### Technisches Gebiet

Die Erfindung betrifft die Verwendung eines Kammpolymers zur Erhöhung der Fliessgeschwindigkeit und/oder zur Reduktion der Viskosität einer mineralischen Bindemittelzusammensetzung. Ein weiterer Aspekt der Erfindung betrifft eine mineralische Bindemittelzusammensetzung sowie einen ausgehärteten Formkörper enthaltend das Kammpolymer.

### Stand der Technik

Dispergiermittel oder Fliessmittel werden in der Bauindustrie als Verflüssiger oder wasserreduzierende Mittel für Bindemittelzusammensetzungen, wie z.B. Beton, Mörtel, Zemente, Gipse und Kalk, eingesetzt. Die Dispergiermittel sind im Allgemeinen organische Polymere, welche dem Anmachwasser zugesetzt oder als Feststoff den Bindemittelzusammensetzungen beigefügt werden. Dadurch können sowohl die Konsistenz Bindemittelzusammensetzung während der Verarbeitung als auch die Eigenschaften in ausgehärtetem Zustand in vorteilhafter Weise verändert werden.

Die Wahl und Dosierung eines geeigneten Dispergiermittels hängt insbesondere von der spezifischen Zusammensetzung, der Verarbeitungstechnik oder dem Einsatzzweck der Bindemittelzusammensetzung ab. Gerade bei speziellen Bindemittelzusammensetzungen, wie z.B. Spezialbetonen oder Spezialmörteln, stellt dies eine anspruchsvolle Aufgabe dar.

Zu den Spezialbetonen gehört z.B. sogenannt "selbstverdichtender Beton" (Engl. Self-Compacting Concrete). Selbstverdichtender Beton weist ein einzigartiges Fliessvermögen und Eigenverdichtungsverhalten auf. So fliesst selbstverdichtender Beton rasch und entmischungsfrei rein aufgrund der Schwerkraft, füllt Hohlräume selbständig aus und entlüftet ohne Aufbringen von Verdichtungsenergie. Ein Vibrieren wie bei herkömmlichem Beton ist somit nicht notwendig. Selbstverdichtender Beton ist daher im Besonderen vorteilhaft wenn hohe Einbauleistungen gefragt sind, bei anspruchsvollen geometrischen Formen, bei engmaschiger Bewehrung, bei geringen Bauteilstärken oder in Situationen, in welchen ein Aufbringen von zusätzlicher Verdichtungsenergie nur schwer oder gar nicht möglich ist. Selbstverdichtender Beton weist im Vergleich zu gewöhnlichen Beton typischerweise eine veränderte Sieblinie und/oder einen höheren Mehlkorngehalt auf.

Bei selbstverdichtendem Beton werden optimale Verarbeitungseigenschaften nur erreicht, wenn sowohl die Fliessgrenze oder das Setzfliessmass als auch die Viskosität oder die Fliessgeschwindigkeit des Betons zugleich jeweils in bestimmten Bereichen eingestellt werden. Andernfalls kann es leicht zur Entmischung bzw. Separation der Betonbestandteile kommen, es kann ein unzureichendes Fliessverhalten bzw. Stagnation resultieren oder es treten unerwünschte Lufteinschlüsse auf.

Die Wahl eines geeigneten Dispergiermittels und dessen Dosierung in selbstverdichtendem Beton ist daher nicht trivial. In der Praxis werden üblicherweise Hochleistungsverflüssiger in Form von Polycarboxylatethern eingesetzt.

Die WO 2009/044046 offenbart in diesem Zusammenhang z.B. Dispergiermittel auf Basis von Polycarboxylat basierten Kammpolymeren mit welchen sich unter anderem die Viskositäten von selbstnivellierenden Bindemittelzusammensetzungen reduzieren lassen. Die Kammpolymere weisen dabei speziell hydrophobe Gruppen in den Seitenketten auf.

Viele der bekannten Dispergiermittel vermögen jedoch nicht vollständig zu überzeugen. Einerseits beeinflussen bekannte Dispergiermittel häufig sowohl das Setzfliessmass als auch die Fliessgeschwindigkeit der mineralischen Bindemittelzusammensetzung zugleich. Eine gezielte Erhöhung der Fliessgeschwindingkeit von mineralischen Bindemittelzusammensetzung, ohne dabei die Fliessgrenze oder das Setzmass zu verändern, ist somit kaum möglich. Andere Dispergiermittel verlangen nach speziellen chemischen Gruppen oder komplizierten chemischen Strukturen, was wiederum die Herstellung kompliziert und teuer macht.

Es besteht daher nach wie vor Bedarf nach verbesserten Dispergiermitteln, welche die genannten Nachteile nicht aufweisen.

### Darstellung der Erfindung

Aufgabe der vorliegenden Erfindung ist es daher, ein Dispergiermittel bereit zu stellen, welches eine gezielte Erhöhung der Fliessgeschwindigkeit und/oder eine Reduktion der Viskosität von mineralischen Bindemittelzusammensetzungen ermöglicht. Nach Möglichkeit sollen dabei weitere Eigenschaften der mineralischen Bindemittelzusammensetzungen, insbesondere das Setzmass oder die Fliessgrenze, möglichst unverändert bleiben. Bevorzugt soll das Dispergiermittel zudem mit anderen Zusatzmitteln verwendbar sein. Das Dispergiermittel soll insbesondere für selbstverdichtenden Beton geeignet sein.

Überraschenderweise wurde gefunden, dass die Aufgabe durch die Merkmale des unabhängigen Anspruchs 1 gelöst werden.

Der Kern der Erfindung liegt in der Verwendung eines Kammpolymers zur Erhöhung der Fliessgeschwindigkeit und/oder Reduktion der Viskosität einer mineralischen Bindemittelzusammensetzung, wobei das Kammpolymer eine Hauptkette umfassend Säuregruppen aufweist und an der Hauptkette Seitenketten angebunden sind, und wobei ein durchschnittliches zahlengemitteltes Molekulargewicht (Mₙ) sämtlicher Seitenketten 120 - 1'000 g/mol beträgt, und ein Molverhältnis der Säuregruppen zu den Seitenketten im Bereich von 0.5 - 2 liegt.

Wie sich gezeigt hat, sind bei Verwendung der erfindungsgemässen Kammpolymere mineralische Bindemittelzusammensetzungen, z.B. in Form von selbstverdichtendem Beton, mit stark verbesserter Füllfähigkeit und Fliessgeschwindigkeit erhältlich. Dies ohne dass eine signifikante Entmischungen oder Separationen der Bindemittelzusammensetzungen oder Lufteinschlüsse auftreten. Überraschend ist insbesondere auch, dass trotz der Erhöhung der Fliessgeschwindigkeit die Fliessgrenze der Bindemittelzusammensetzungen durch die verwendeten Kammpolymere im Wesentlichen nicht beeinflusst wird.

Zudem wurde gefunden, dass die erfindungsgemäss verwendeten Kammpolymere mit anderen Zusatzmitteln, wie z.B. weiteren Dispergiermitteln, gut kompatibel sind.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Ein erster Aspekt der Erfindung betrifft die Verwendung eines Kammpolymers zur Erhöhung der Fliessgeschwindigkeit und/oder zur Reduktion der Viskosität einer mineralischen Bindemittelzusammensetzung, wobei das Kammpolymer eine Hauptkette umfassend Säuregruppen aufweist und an der Hauptkette Seitenketten angebunden sind, und wobei ein durchschnittliches zahlengemitteltes Molekulargewicht sämtlicher Seitenketten 120 - 1'000 g/mol beträgt, und ein Molverhältnis der Säuregruppen zu den Seitenketten im Bereich von 0.5 - 2 liegt.

Als Mass für die Fliessgeschwindindigkeit wird vorliegend die t₅₀₀-Zeit gemäss DIN EN 12350-8:2010-12 ("Prüfung von Frischbeton - Teil 8: Selbstverdichtender Beton - Setzfliessversuch") betrachtet. Die t₅₀₀-Zeit ist im Wesentlichen die Zeit in welcher mit der angemachten oder verarbeitbaren mineralischen Bindemittelzusammensetzung ein Setzfliessmasses von 500 mm (Durchmesser) erreicht wird. Je kürzer die t₅₀₀-Zeit, desto grösser die Fliessgeschwindigkeit.

Entsprechend der DIN EN 12350-8:2010-12 ist die Fliessgeschwindingkeit zudem ein Mass für die Viskosität. Je kürzer die t₅₀₀-Zeit, desto höher die Fliessgeschwindigkeit und desto geringer die Viskosität der mineralischen Bindemittelzusammensetzung.

Bei der erfindungsgemäßen Verwendung des Kammpolymers zeigt eine mit Wasser angemachte mineralische Bindemittelzusammensetzung eine erhöhte Fliessgeschwindigkeit und/oder geringere Viskosität. Das bedeutet, dass die Zusammensetzung nach Zugabe des erfindungsgemässen Kammpolymers schneller fliesst oder eine geringere Viskosität aufweist im Vergleich mit einer analogen Zusammensetzung, die jedoch das Kammpolymer nicht enthält, oder im Vergleich mit einer analogen Zusammensetzung die ein nicht erfindungsgemässes Kammpolymer enthält.

Bevorzugt beeinflusst dass Kammpolymer bei der erfindungsgemässen Verwendung und einer Dosierung von 1 Gew.-% bezogen auf den Bindemittelgehalt die Fliessgrenze und/oder das Setzfliessmass der mineralischen Bindemittelzusammensetzung, gemessen nach DIN EN 12350-8:2010-12, um weniger als 15%, insbesondere weniger als 10%, bevorzugt weniger als 5% im Speziellen weniger als 2% oder weniger als 1%. Dies bedeutet, dass das Setzmass und/oder die Fleissgrenze der mineralischen Bindemittelzusammensetzung nach Zugabe von 1 Gew.-% des erfindungsgemässen Kammpolymers um weniger als 15%, insbesondere weniger als 10%, bevorzugt weniger als 5% im Speziellen weniger als 2% oder weniger als 1%, vom Setzmass einer analogen Zusammensetzung, die das erfindungsgemässe Kammpolymer nicht enthält, abweicht.

Erfindungsgemäss ist ein durchschnittliches zahlengemitteltes Molekulargewicht (Mₙ) der Seitenketten 120 - 1'000 g/mol. Dabei ist es möglich, dass nebst Seitenketten mit einem Molekulargewicht im Bereich von 120 - 1'000 g/mol auch solche mit einem Molekulargewicht von weniger als 120 g/mol und/oder mehr als 1'000 g/mol vorliegen. Im Durchschnitt ist das zahlengemitteltes Molekulargewicht (Mₙ) sämtlicher -Seitenketten aber stets im Bereich von 120 - 1'000 g/mol.

Gemäss einer vorteilhaften Ausführungsform ist ein maximales zahlengemitteltes Molekulargewicht der Seitenketten kleiner als 1'000 g/mol. In diesem Fall liegen keine Seitenketten mit einem zahlengemittelten Molekulargewicht über 1'000 g/mol vor.

Bevorzugt liegt ein durchschnittliches zahlengemitteltes Molekulargewicht (Mₙ) der Seitenketten im Bereich von 160 - 900 g/mol, bevorzugt 250 - 800 g/mol, insbesondere 300 - 750 g/mol, im Speziellen 400 - 600 g/mol oder 450 - 550 g/mol. Damit wird eine optimale Erhöhung der Fliessgeschwindigkeit erreicht und zugleich der Einfluss auf das Setzmass minimiert.

Für spezielle Anwendungen können aber auch andere Molekulargewichte geeignet sein.

Das durchschnittliche gewichtsgemittelte Molekulargewicht (M_{W}) und das durchschnittliche zahlengemittelte Molekulargewicht (Mₙ) wird vorliegend durch Gel-Permeations-Chromatographie (GPC) mit Polyethylenglycol (PEG) als Standard bestimmt. Diese Technik ist dem Fachmann an sich bekannt.

Das Molverhältnis der Säuregruppen zu den Seitenketten liegt insbesondere im Bereich von 0.75 - 1.7, speziell 0.8 - 1.6, insbesondere 0.85 - 1.5 oder 0.9 - 1.2.

Mit Vorteil sind die Seitenketten über Ester-, Ether-, Amid- und/oder Imidgruppen an die Hauptkette gebunden. Bevorzugt sind Ester-, Ether-und/oder Amidgruppen, insbesondere Ester und/oder Ethergruppen.

Insbesondere enthalten die Seitenketten Polyalkylenoxid-Seitenketten. Bevorzugt sind bestehen die Seitenketten zu wenigstens 50 Mol-%, insbesondere wenigstens 75 Mol-%, bevorzugt wenigstens 95 Mol-%, im Speziellen wenigstens 98 Mol.-% oder 100 Mol-%, aus Polyalkylenoxid-Seitenketten.

Bevorzugt beträgt ein Anteil an Ethylenoxideinheiten in den Polyalkylenoxid-Seitenketten, bezogen auf sämtliche in den Seitenketten vorhandenen Alkylenoxideinheiten, mehr als 90 Mol-%, insbesondere mehr als 95 Mol-%, bevorzugt mehr als 98 Mol-%, im Speziellen 100 Mol-%.

Insbesondere weisen die Polyalkylenoxid-Seitenketten keine hydrophoben Gruppen, insbesondere keine Alkylenoxide mit drei oder mehr Kohlenstoffatomen, auf.

Ein hoher Anteil an Ethylenoxideinheiten oder ein geringer Gehalt an Alkylenoxiden mit drei oder mehr Kohlenstoffatomen reduziert die Gefahr von unerwünschtem Lufteintrag.

Die Polyalkylenoxid-Seitenketten weisen insbesondere eine Struktur gemäss Formel -[AO]ₙ-R^{a} auf. Dabei ist insbesondere A = C₂- bis C₄-Alkylen. R^{a} steht bevorzugt für H, eine C₁- bis C₂₀-Alkylgruppe, -Cyclohexylgruppe oder -Alkylarylgruppe. Mit Vorteil ist n = 2 - 250.

Der Begriff "Säuregruppen" umfasst vorliegend insbesondere Carboxygruppen, Sulfonsäuregruppen, Phosphorsäuregruppen und/oder Phosphonsäuregruppen. Die Säuregruppen können jeweils in protonierter Form, in deprotonierter Form, z.B. als Anion, und/oder in Form eines Salzes mit einem Gegenion oder Kation vorliegen. Die Säuregruppen können also z.B. teilweise oder vollständig neutralisiert vorliegen.

Die Säuregruppen weisen insbesondere eine Struktur gemäss Formel -COOM, -SO₂-OM, -O-PO(OM)₂ und/oder -PO(OM)₂ auf. Ganz besonders bevorzugt weisen die Säuregruppen eine Struktur gemäss der Formel -COOM auf. Jedes M steht dabei unabhängig von den übrigen für H, ein Alkalimetallion, ein Erdalkalimetallion, ein zwei oder dreiwertiges Metallion, ein Ammoniumion oder eine organische Ammoniumgruppe.

Falls M eine organische Ammoniumgruppe ist, leitet sich diese insbesondere von Alkylaminen oder von C-hydroxylierten Aminen, insbesondere von Hydroxyalkylaminen, wie z.B. Ethanolamin, Diethanolamin oder Triethanolamin, ab.

Ein gewichtsgemitteltes Molekulargewicht (M_{W}) des Kammpolymers beträgt insbesondere 5'000 - 150'000 g/mol, bevorzugt 10'000 - 100'000 g/mol,. Ein zahlengemitteltes Molekulargewicht (Mₙ) des Kammpolymers beträgt mit Vorteil 3000 - 100'000 g/mol, insbesondere 8'000 - 70'000 g/mol.

Das Kammpolymer umfasst bevorzugt folgende Teilstruktureinheiten oder besteht daraus:
a) a Molanteile einer Teilstruktureinheit **S1** der Formel (I) 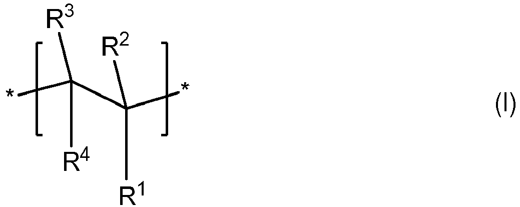
b) b Molanteile einer Teilstruktureinheit **S2** der Formel (II) 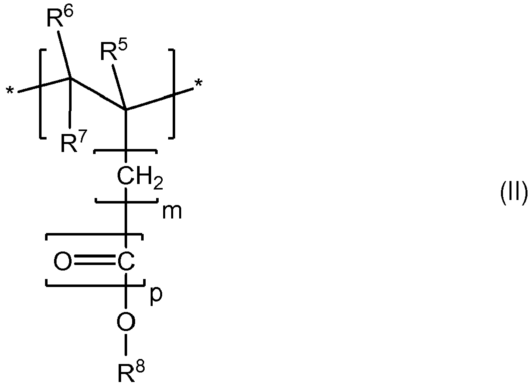
c) optional c Molanteile einer Teilstruktureinheit **S3** der Formel (III) 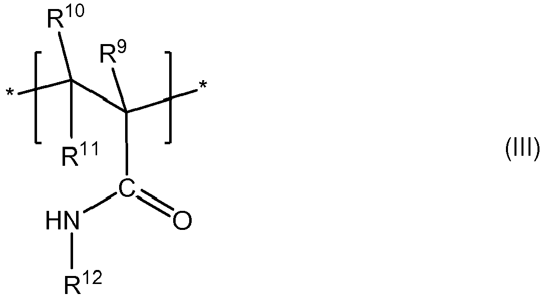
d) optional d Molanteile einer Teilstruktureinheit S4 der Formel (IV) 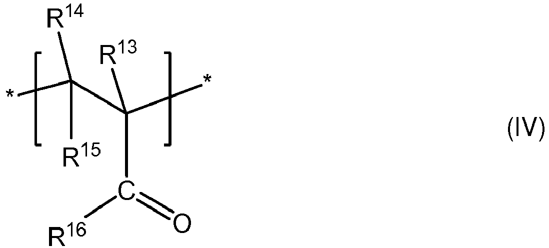
wobei
- R¹,: jeweils unabhängig voneinander, für -COOM, -SO₂-OM, -O-PO(OM)₂ und/oder -PO(OM)₂ steht,
- R², R³, R⁵, R⁶, R⁹, R¹⁰, R¹³ und R¹⁴: jeweils unabhängig voneinander, für H oder eine Alkylgruppe mit 1 bis 5 Kohlenstoffatomen stehen,
- R⁴, R⁷, R¹¹ und R¹⁵,: jeweils unabhängig voneinander, für H, -COOM oder eine Alkylgruppe mit 1 bis 5 Kohlenstoffatomen stehen,
- M,: unabhängig voneinander, H⁺, ein Alkalimetallion, ein Erdalkalimetallion, ein zwei oder dreiwertiges Metallion, ein Ammoniumion, eine organische Ammoniumgruppe,
- m: = 0, 1 oder 2 ist,
- p =: 0 oder 1 ist,
- R⁸ und R¹²,: jeweils unabhängig voneinander, für eine C₁- bis C₂₀-Alkylgruppe, -Cycloalkylgruppe, -Alkylarylgruppe oder für eine Gruppe der Formel -[AO]ₙ-R^{a} steht, wobei A = C₂- bis C₄-Alkylen, R^{a} für H, eine C₁- bis C₂₀-Alkylgruppe, -Cyclohexylgruppe oder -Alkylarylgruppe steht, und n = 2 - 250,
- R¹⁶,: unabhängig voneinander, für NH₂, -NR^{b}R^{c}, -OR^{d}NR^{e}R^{f} stehen, wobei R^{b} und R^{c}, unabhängig voneinander, für
eine C₁- bis C₂₀-Alkylgruppe, -Cycloalkylgruppe -Alkylaryl¬gruppe oder -Arylgruppe stehen, oder für eine Hydroxyalkylgruppe oder für eine Acetoxyethyl- (CH₃-CO-O-CH₂-CH₂-) oder eine Hydroxyisopropyl- (HO-CH(CH₃)-CH₂-) oder eine Acetoxyisopropylgruppe (CH₃-CO-O-CH(CH₃)-CH₂-) stehen;
- oder R^{b} und R^{c}: bilden zusammen einen Ring, von dem der Stickstoff ein Teil ist, um einen Morpholin- oder Imidazolinring aufzubauen;
- R^{d}: eine C₂ -C₄-Alkylengruppe ist,
- R^{e} und R^{f}: je unabhängig voneinander eine C₁- bis C₂₀-Alkylgruppe, -Cycloalkylgruppe, -Alkylarygruppe, -Arylgruppe oder eine Hydroxyalkylgruppe darstellen,

und wobei a, b, c und d Molanteile der jeweiligen Teilstruktureinheiten **S1, S2, S3** und **S4** darstellen, mit
a/b/c/d = (0.1 - 0.9) / (0.1 - 0.9) / (0 - 0.8) / (0 - 0.8), insbesondere a/b/c/d = (0.3 - 0.7) / (0.2 - 0.7) / (0 - 0.6) / (0 - 0.4), bevorzugt a/b/c/d = (0.4 - 0.7) / (0.3 - 0.6) / (0.001 - 0.005) / 0 und mit der Massgabe dass a + b + c + d = 1 ist

Die Abfolge der Teilstruktureinheiten **S1, S2, S3** und **S4** kann alternierend, blockartig oder zufällig sein. Weiter ist es auch möglich, dass zusätzlich zu den Teilstruktureinheiten **S1, S2, S3** und **S4** weitere Teilstruktureinheiten vorliegen.

Bevorzugt weisen die Teilstruktureinheiten **S1, S2, S3** und **S4** zusammen einen Gewichtsanteil von wenigstens 50 Gew.-%, insbesondere wenigstens 90 Gew.-%, ganz besonders bevorzugt wenigstens 95 Gew.-%, am Gesamtsgewicht des Kammpolymers auf.

Ein Verhältnis von a/(b+c+d) = liegt insbesondere im Bereich von 0.5 - 2, bevorzugt 0.75 - 1.7, speziell 0.8 - 1.6, insbesondere 0.85 - 1.5 oder 0.9 - 1.2.

Insbesondere sind im Kammpolymer R¹ = COOM, R² = H oder CH₃, R³ = R⁴ = H. Damit lässt sich das Kammpolymer auf der Basis von Acryl- oder Methacrylsäuremonomeren herstellen, was aus ökonomischer Sicht interessant ist. Zudem ergibt sich mit derartigen Kammpolymeren im vorliegenden Zusammenhang eine gute Viskositätsreduktion.

Ebenfalls vorteilhaft sind Kammpolymere mit R¹ = COOM, R² = H, R³ = H und R⁴ = COOM. Solche Kammpolymere lassen sich auf der Basis von Maleinsäuremonomeren herstellen.

Vorteilhafterweise sind R⁵ = H oder CH₃ und R⁶ = R⁷ = H. Derartige Kammpolymere lassen sich z.B. ausgehend von (Meth)acrylsäureestern, Vinyl-(Meth)allyl- oder Isoprenolethern herstellen.

Falls **S3** vorhanden ist, sind insbesondere R⁹ = H oder CH₃ und R¹⁰ = R¹¹ = H.

Falls **S4** vorhanden ist, sind insbesondere R¹³ = H oder CH₃ und R¹⁴ = R¹⁵ = H.

Ganz besonders vorteilhaft stehen R² und R⁵ für Mischungen aus H und -CH₃. Bevorzugt sind dabei Mischungen mit 40 - 60 Mol-% H und 40 - 60 Mol-% - CH₃. Falls die entsprechenden Teilstruktureinheiten vorhanden sind, gilt dies insbesondere auch für R⁹ und R¹³. Dabei ist zudem bevorzugt R³ und R⁶ gleich H, sowie, falls die entsprechenden Teilstruktureinheiten vorhanden sind, R⁹ und R¹³ gleich H.

Gemäss weiteren vorteilhaften Ausführungsform ist R¹ = COOM, R² = H, R⁵ = CH₃ und R³ = R⁴= R⁶ = R⁷= H.

Bei einer anderen vorteilhaften Ausführungsform ist R¹ = COOM, R² = R⁵ = H oder -CH₃ und R³ = R⁴ = R⁶ = R⁷ = H.

Insbesondere steht R⁸ und/oder R¹² für -[AO]ₙ-R^{a}, wobei bevorzugt A = C₂-Alkylen und/oder R^{a} für H oder eine C₁-Alkylgruppe steht. Vorteilhafterweise ist n = 2 - 30, insbesondere n = 5 - 23, bevorzugt n = 8 - 22, im Speziellen n = 10 - 15.

Im Besonderen ist m = 0 und p = 1. Ebenfalls vorteilhaft ist m = 1 oder 2 und p = 0, wobei insbesondere R⁵ für -CH₃ steht.

Bei besonders bevorzugten Kammpolymeren gilt:
a) R¹ steht für COOM;
b) R² und R⁵ stehen, unabhängig voneinander, für H, -CH₃ oder Mischungen daraus. Ganz besonders vorteilhaft stehen R² und R⁵ dabei für Mischungen aus H und -CH₃. Bevorzugt sind dabei Mischungen mit 40 - 60 Mol-% H und 40 - 60 Mol-% -CH₃. Bei vorhandene Teilstruktureinheiten **S3** und/oder **S4** gilt dies insbesondere auch für R⁹ und R¹³;
c) R³ und R⁶ stehen für H. Bei vorhandene Teilstruktureinheiten **S3** und/oder **S4** gilt dies insbesondere auch für R¹⁰ und/oder R¹⁴;
d) R⁴ und R⁷ stehen, unabhängig voneinander, für H oder -COOM, bevorzugt für H. Bei vorhandene Teilstruktureinheiten **S3** und/oder **S4** gilt dies insbesondere auch für R¹¹ und R¹⁵;
e) R⁸ steht für -[AO]ₙ-R^{a}, wobei bevorzugt A = C₂-Alkylen und/oder R^{a} für H oder eine C₁-Alkylgruppe steht. Vorteilhafterweise ist n = 2 - 30, insbesondere n = 5 - 23, bevorzugt n = 8 - 22, im Speziellen n = 10 - 15. Bei vorhandener Teilstruktureinheit **S3** gilt dies insbesondere auch für R¹².
f) m=0 und p=1.

Die mineralische Bindemittelzusammensetzung ist insbesondere eine verarbeitbare und/oder wässrige mineralische Bindemittelzusammensetzung. Die mineralische Bindemittelzusammensetzung enthält zumindest ein mineralisches Bindemittel. Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weisskalk) sein.

Insbesondere enthält das mineralische Bindemittel oder die Bindemittelzusammensetzung ein hydraulisches Bindemittel, bevorzugt Zement. Besonders bevorzugt ist ein Zement mit einem Zementklinkeranteil von ≥ 35 Gew.-%. Insbesondere ist der Zement vom Typ CEM I, CEM II und/oder CEM III, CEM IV oder CEM V (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht das mineralische Bindemittel zu ≥ 95 Gew.-% aus hydraulischem Bindemittel, insbesondere aus Zementklinker.

Es kann aber auch vorteilhaft sein, wenn das mineralische Bindemittel oder die mineralische Bindemittelzusammensetzung andere Bindemittel enthält oder daraus besteht. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub. Ebenso kann die Bindemittelzusammensetzung inerte Stoffe wie z.B. Kalkstein, Quarzmehle und/oder Pigmente enthalten. In einer vorteilhaften Ausführungsform enthält das mineralische Bindemittel 5-95 Gew.-%, insbesondere 5-65 Gew.-%, besonders bevorzugt 15-35 Gew.-%, latenthydraulische und/oder puzzolanische Bindemittel. Vorteilhafte latenthydraulische und/oder puzzolanische Bindemittel sind Schlacke und/oder Flugasche.

In einer besonders bevorzugten Ausführungsform enthält das mineralische Bindemittel ein hydraulisches Bindemittel, insbesondere Zement oder Zementklinker, und ein latenthydraulisches und/oder puzzolanisches Bindemittel, bevorzugt Schlacke und/oder Flugasche. Der Anteil des latenthydraulischen und/oder puzzolanischen Bindemittels beträgt dabei besonders bevorzugt 5 - 65 Gew.-%, besonders bevorzugt 15 - 35 Gew.-%, während wenigstens 35 Gew.-%, im Speziellen wenigstens 65 Gew.-%, des hydraulischen Bindemittels vorliegen.

Bei der mineralischen Bindemittelzusammensetzung handelt es sich bevorzugt um eine Mörtel- oder Betonzusammensetzung, insbesondere um selbstverdichtenden Beton. Die mineralische Bindemittelzusammensetzung ist insbesondere eine verarbeitbare und/oder mit Wasser angemachte mineralischen Bindemittelzusammensetzung.

Ein Gewichtsverhältnis von Wasser zu Bindemittel in der mineralischen Bindemittelzusammensetzung liegt bevorzugt im Bereich von 0.25 - 0.7, insbesondere 0.26 - 0.65, bevorzugt 0.27 - 0.60, im Speziellen 0.28 - 0.55.

Das Kammpolymer wird mit Vorteil mit einem Anteil von 0.01 - 10 Gew.-%, insbesondere 0.1 - 7 Gew.-% oder 0.2 - 5 Gew.-%, bezogen auf den Bindemittelgehalt, eingesetzt.

Insbesondere enthält die mineralische Bindemittelzusammensetzung Mehlkorn, bevorzugt mit einem Anteil > 350 kg/m³, insbesondere 400 - 600 kg/m³. Ein Zementgehalt beträgt dabei insbesondere zwischen 320 und 380 kg/m³.

Das Mehlkorn beinhaltet dabei insbesondere Flugasche, Metakaolin, Silicastaub und/oder inertes Gesteinsmehl.

Insbesondere ist das Mehlkorn zementfein. Insbesondere liegt ein Grösstkorndurchmesser des Mehhlkorns, z.B. gemessen durch Lasergranulometrie, unterhalb 0.125 mm.

Bevorzugt weist das Mehlkorn eine Blaine-Feinheit von wenigstens 1'000 cm²/g, insbesondere wenigstens 1'500 cm²/g, bevorzugt wenigstens 2'500 cm²/g, noch weiter bevorzugt wenigstens 3'500 cm²/g oder wenigsten 5'000 cm²/g, auf.

In einem weiteren Aspekt bezieht sich die Erfindung auf eine Zusammensetzung, insbesondere eine Mörtelzusammensetzung, eine Betonzusammensetzung oder eine zementöse Zusammensetzung, enthaltend mindestens ein wie vorstehend beschriebenes Kammpolymer sowie ein mineralisches Bindemittel. Das mineralische Bindemittel ist vorzugsweise ein hydraulisches Bindemittel, insbesondere Zement, bevorzugt Portlandzement.

Die Zusammensetzung ist insbesondere eine selbstverdichtende Betonzusammensetzung.

Das Kammpolymer verfügt dabei mit Vorteil über einem Anteil von 0.01 - 10 Gew.-%, insbesondere 0.1 - 7 Gew.-% oder 0.2 - 5 Gew.-%, bezogen auf den Bindemittelgehalt.

Insbesondere enthält die Zusammensetzung Mehlkorn, bevorzugt mit einem Anteil > 350 kg/m³, insbesondere 400 - 600 kg/m³. Ein Zementgehalt beträgt dabei insbesondere zwischen 320 und 380 kg/m³.

Ein weiterer Aspekt betrifft einen Formkörper, welcher erhältlich ist durch Aushärten einer wie vorstehend beschriebenen Zusammensetzung, insbesondere eines selbstverdichtenden Betons, nach Zugabe von Wasser. Die verwendeten Kammpolymere lassen sich in an sich bekannter Weise herstellen.

Ein erstes und im Folgenden auch als "Polymeranaloges Verfahren" genanntes Verfahren zur Herstellung eines wie vorstehend beschriebenen Kammpolymers umfasst die Schritte:
a) Bereitstellen und/oder Herstellen eines Basispolymers **BP** umfassend oder bestehend aus einer Struktureinheit der Formel V 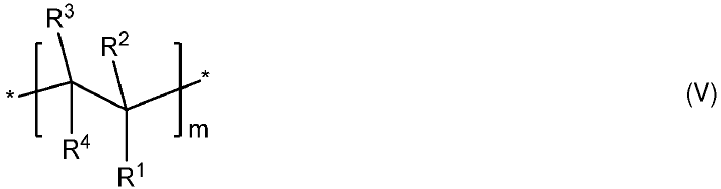 wobei
   M, R¹, R², R³ und R⁴ wie vorstehend definiert sind, wobei R¹ insbesondere für -COOM steht, und
   m > 2, insbesondere m = 20 - 100 ist;
b) Veresterung des Basispolymers **BP** mit einer Verbindung der Formel VI

   HO-R⁸ (VI)
c) optional Amidierung des Basispolymers **BP** mit einer Verbindung der Formel VII

   H₂N-R¹² (VII)
d) optional Amidierung und/oder Veresterung des Basispolymers **BP** mit einer Verbindung der Formel VIII

   H-R¹⁶ (VIII)

   zum Kammpolymer **KP,**
   wobei R⁸, R¹² und R¹⁶ wie vorstehend definiert sind.

Das Basispolymer **BP** in Schritt a) ist insbesondere eine Polyacrylsäure, eine Polymethacrylsäure und/oder ein Copolymer aus Acrylsäure und Methacrylsäure. Ein zahlengemitteltes Molekulargewicht (Mₙ) des Basispolymers **BP** der Formel (V) ist insbesondere gleich 500 - 20'000 g/mol, insbesondere 500 - 10'000 g/mol, weiter bevorzugt 3'000 - 6'000 g/mol.

Derartige Basispolymere **BP** lassen sich in an sich bekannter Weise aus Acrylsäuremonomeren und/oder Methacrylsäuremonomeren herstellen. Es ist aber beispielsweise auch möglich, Maleinsäuremonomere und/oder Maleinsäureanhydridmonomere einzusetzen. Dies kann unter anderem aus ökonomischen und sicherheitstechnischen Aspekten vorteilhaft sein.

Das Basispolymer **BP** wird in Schritt a) insbesondere durch wässrige radikalische Polymerisation, beispielsweise von Acrylsäure und/oder Methacrylsäure, in Gegenwart eines Radikalinitiators und/oder eines Molekulargewichtsreglers hergestellt.

Der Radikalinitiator in Schritt a) umfasst insbesondere Na-, K- oder Ammoniumperoxodisulfat. Ebenfalls geeignet als Radikalinitiator in Schritt a) ist z.B. ein Redoxpaar auf Basis von H₂O₂ / Fe²⁺.

Bevorzugt ist der Molekulargewichtsregler in Schritt a) ein Alkalisulfit oder Hydrogensulfit. Ebenfalls vorteilhaft ist ein Phosphinsäurederivat. Der Molekulargewichtsregler in Schritt a) kann auch eine organische Verbindung sein, welche eine Thiolgruppe enthält.

Entsprechende Basispolymere **BP** können grundsätzlich auch bei verschiedenen Anbietern kommerziell bezogen werden.

Zur Veresterung in Schritt b) können unter anderem Säuren und/oder Basen, beispielsweise als Katalysatoren, beigegeben werden. Mit Vorteil erfolgt die Veresterung bei erhöhten Temperaturen von 120 - 200°C, insbesondere 160 - 180°C. Dadurch kann die Ausbeute signifikant verbessert werden.

Die in Schritt b) eingesetzten Verbindungen der Formeln V, VI und VII sind kommerziell bei verschiedenen Anbietern erhältlich.

Ein zweites und im Folgenden auch "Copolymerisationsverfahren" genanntes Verfahren zur Herstellung eines wie vorstehend beschriebenen Kammpolymers umfasst eine Copolymerisation von:
a Molanteilen von Monomeren **M1** der Formel IX 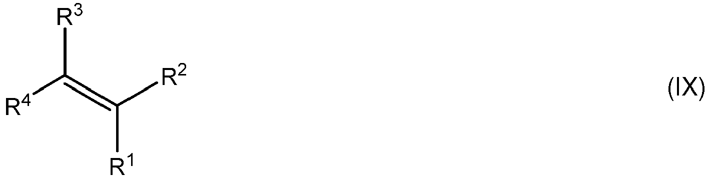
b Molanteilen von Monomeren **M2** der Formel X 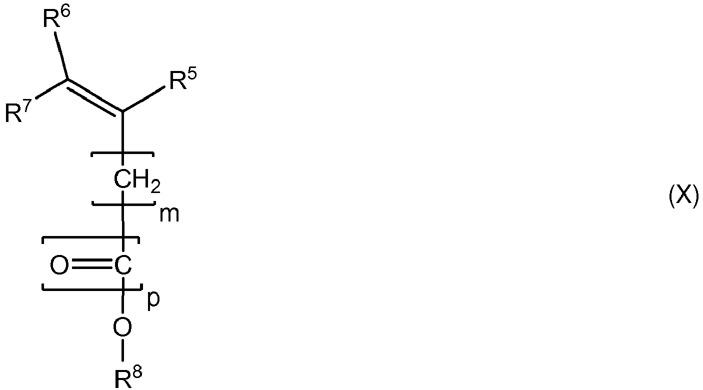 optional c Molanteilen von Monomeren **M3** der Formel XI 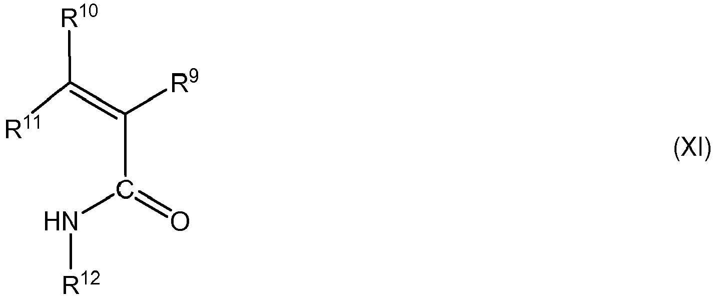 optional d Molanteilen von Monomeren **M4** der Formel XII 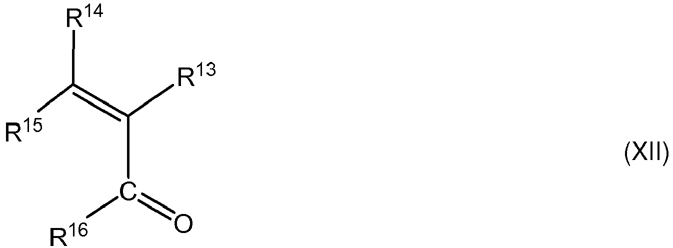
wobei a, b, c und d die Molanteile der jeweiligen Momomere **M1, M2, M3** und **M4** darstellen,
wobei a, b, c d, M, R¹ - R¹⁶, m und p wie vorstehend definiert sind.

Die Monomere **M2, M3** und **M4** können in an sich bekannter Weise durch Veresterung oder Amidierung von Acrylsäure, Methacrylsäure, Maleinsäure und/oder Maleinsäureanhydrid mit Verbindungen gemäss Formeln VI, VII oder VIII (siehe oben) hergestellt werden.

Für die Copolymerisation oder das zweite Verfahren können die bereits vorstehend im Zusammenhang mit dem ersten Verfahren genannten Radikalinitiatioren und/oder Molekulargewichtsregler eingesetzt werden.

### Ausführungsbeispiele

### 1. Messmethoden

Molekulargewichtsbestimmungen erfolgten durch Gel-Permeations-chromatographie (GPC) mit wässrigen Elutionsmitteln. Ein eng kalibrierter Polyethylenglycol-Standard diente als Kalibrierung. Als Elutionsmittel wurde eine 0.1m-Natriumnitrat-Lösung vom pH = 12 verwendet. Der isokratische Fluss betrug 0.8 ml/min. IGPC-Säule: Varian Ultrahydrogel 7.8 x 300 mm. Die Peaks wurden mittels eines Differentialrefraktometers Varian RI-4 und eines UV-Detektors Waters SAT/IN-Module quantifiziert.

### 2. Verwendete Materialien

Folgenden Ausgangsmaterialien wurden verwendet:
- Eine Polycarbonsäure bestehend aus Acryl- und Methacrylsäureeinheiten (Molverhältnis 1:1) wurde verwendet. Die Polycarbonsäure wurde gemäss bekannten Herstellungvorschriften mittels radikalischer Polymerisation hergestellt. Die mittlere Molmasse der verwendeten Polycarbonsäure beträgt 5'000 g/mol..
- MPEG 500: Polyethylenglykol-monomethylether mit mittlerer Molmasse 500 g/mol. Ethylenoxid(EO)-Gehalt: ∼11 EO-Gruppen/Mol.

### 3. Herstellungsbeispiel für Kammpolymer

Kammpolymer **KP-1,** bestehend aus Teilstruktureinheiten **S1, S2** und **S3** im Molverhältnis von ca. 0.5/0.5/0.002, hergestellt durch polymeranaloge Veresterung einer Polycarbonsäure der Molmasse von ca. 5'000g/mol mit MPEG 500. Veresterungsgrad: 50%, bezogen auf Säuregruppen.

In einem 2 Liter fassenden 4-Halsrundkolben mit mechanischem Rührer, Thermometer, Gaseinleitungsrohr und Destillationsbrücke wurden 340g einer wässrigen Lösung der Polycarbonsäure (50 Gew.-%) vorgelegt. Nach Erwärmen auf 50°C wurden nun rasch 500g MPEG 500 zugegeben und das Gemisch innerhalb von 45 Minuten unter Stickstoff auf 165°C erwärmt und 30 Minuten bei 165°C gehalten. Danach wird 4g 50%-ige Natronlauge zugegeben und anschliessend die Temperatur auf 180°C gesteigert unter gleichzeitigem Anlegen eines Vakuums von 80mbar. Diese Rektionslösung wurde nun innerhalb von 4 Stunden bei 180°C gehalten, wobei der Innendruck auf 70mBar fiel.

Nach dem Abkühlen auf 90°C wurden 400g der Schmelze durch Einrühren in 400g Wasser in eine klare Lösung überführt. Feststoffgehalt: 49.9%

### 4. Frischbetonversuche

### 4.1 Herstellung einer Referenzprobe

Zur Herstellung einer Referenzprobe **R1** wurden Portlandzement (CEM I, 42.5; 325 kg/m³), Schlacke (150 kg/m³), Sikafume (25 kg/m³) und Aggregate (0 - 16 mm) in einem Mischer 60 Sekunden trocken gemischt. Anschliessend wurde das Anmachwasser (w/z = 0.32), in welchem ein herkömmliches Fliessmittel (2.5 Gew.-% bezogen auf Bindemittelgehalt) gelöst vorlag, hinzugefügt und die Frischbetonzusammensetzung während 3 Minuten maschinell weiter gemischt.

Das verwendete herkömmliche Fliessmittel ist ein Polycarboxylat-Kammpolymer mit Polyethylenglykolseitenketten. Das durchschnittliche gewichtsgemittelte Molekulargewicht der Seitenketten beträgt ca. 2000 g/mol und das Molverhältnis der Säuregruppen zu den Seitenketten liegt bei ca. 4.4.

### 4.2 Herstellung einer Frischbetonprobe mit Kammpolymer KP-1

Die Probe **P1** wurde analog zur Referenzprobe hergestellt. Zusätzlich zum herkömmlichen Fliessmittel wurde jedoch 1 Gew.-% (bezogen auf Bindemittelgehalt) des Kammpolmyers **KP-1** im Anmachwasser gelöst und der Frischbetonzusammensetzung beigemischt.

### 4.3 Frischbetoneigenschaften

Das Fliessverhalten von Frischbetonzusammensetzungen ohne (Probe **R1)** und mit Kammpolymer **KP-1** (Probe **P1)** wurde in Setzfliessversuchen gemäss DIN EN 12350-8:2010-12 sowie mit einem Auslauftrichter nach DIN EN 12350-9:2010-12 unmittelbar nach dem Anmachen bestimmt.

Tabelle 1 gibt einen Überblick über die Ergebnisse.

**Tabelle 1: Frischbetoneigenschaften.**

| **Nr.** | **Anteil FM [Gew.-%]** | **Anteil KP-1 [Gew.-%]** | **t₅₀₀ [s]** | **Setzfliessmass [mm]** | **Auslaufzeit** |
|---|---|---|---|---|---|
| **R1** | 2.5 | 0 | 21 | 720 | > 60 |
| **P1** | 2.5 | 1 | 14 | 720 | 35 |

Aus den in Tabelle 1 aufgeführten t₅₀₀-Zeiten und den Auslaufzeiten ist insbesondere ersichtlich, dass die zusätzliche Zugabe des Kammpolymers KP-1 die Viskosität der Frischbetonzusammensetzungen signifikant reduziert bzw. die Fliessgeschwindigkeit erhöht. Dies zudem ohne, dass das Setzfliessmass bzw. die Fliessgrenze beeinflusst wird.

Somit lässt sich **KP-1** gezielt zur Kontrolle der Viskosität oder Fliessgeschwindigkeit einsetzen.

Die vorstehend beschriebenen Ausführungsformen sind jedoch lediglich als illustrative Beispiele zu verstehen, welche im Rahmen der Erfindung beliebig abgewandelt werden können.

## Patentansprüche

1. Verwendung eines Kammpolymers zur Erhöhung der Fliessgeschwindigkeit und/oder zur Reduktion der Viskosität einer mineralischen Bindemittelzusammensetzung, wobei das Kammpolymer eine Hauptkette umfassend Säuregruppen aufweist und an der Hauptkette Seitenketten angebunden sind, und wobei ein durchschnittliches zahlengemitteltes Molekulargewicht (Mₙ) sämtlicher Seitenketten 120 - 1'000 g/mol beträgt, und ein Molverhältnis der Säuregruppen zu den Seitenketten im Bereich von 0.5 - 2 liegt.

2. Verwendung nach Anspruch 1, **dadurch gekennzeichnet, dass** die Seitenketten über Ester-, Ether-, Amid- und/oder Imidgruppen an die Hauptkette gebunden sind.

3. Verwendung nach wenigstens einem der Ansprüche 1 - 2, **dadurch gekennzeichnet, dass** das durchschnittliche zahlengemittelte Molekulargewicht (Mₙ) der Seitenketten im Bereich von 250 - 800 g/mol, insbesondere 300 - 750 g/mol, im Speziellen 400 - 600 g/mol, liegt.

4. Verwendung nach wenigstens einem der Ansprüche 1 - 3, **dadurch gekennzeichnet, dass** die Seitenketten zu wenigstens 50 Mol-%, insbesondere wenigstens 75 Mol-%, bevorzugt wenigstens 95 Mol-% oder 100 Mol-%, aus Polyalkylenoxid-Seitenketten bestehen.

5. Verwendung nach Anspruch 4, **dadurch gekennzeichnet, dass** ein Anteil an Ethylenoxideinheiten in den Polyalkylenoxid-Seitenketten, bezogen auf sämtliche in den Seitenketten vorhandenen Alkylenoxideinheiten, mehr als 90 Mol-%, insbesondere mehr als 95 Mol-%, bevorzugt mehr als 98 Mol-%, im Speziellen 100 Mol-%, beträgt.

6. Verwendung nach wenigstens einem der Ansprüche 1 - 5, **dadurch gekennzeichnet, dass** die Seitenketten keine hydrophoben Gruppen, insbesondere keine Alkylenoxide mit drei oder mehr Kohlenstoffatomen, aufweisen.

7. Verwendung nach wenigstens einem der Ansprüche 1 - 6, **dadurch gekennzeichnet, dass** das Kammpolymer folgende Teilstruktureinheiten umfasst oder daraus besteht:
a) a Molanteile einer Teilstruktureinheit **S1** der Formel (I) 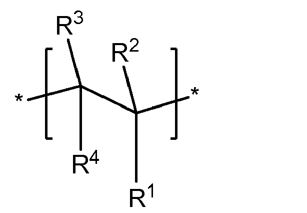
b) b Molanteile einer Teilstruktureinheit **S2** der Formel (II) 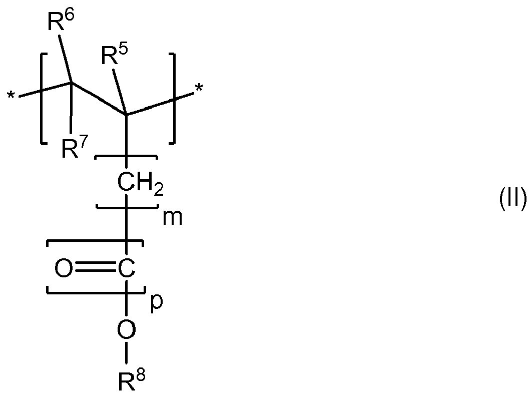
c) optional c Molanteile einer Teilstruktureinheit **S3** der Formel (III) 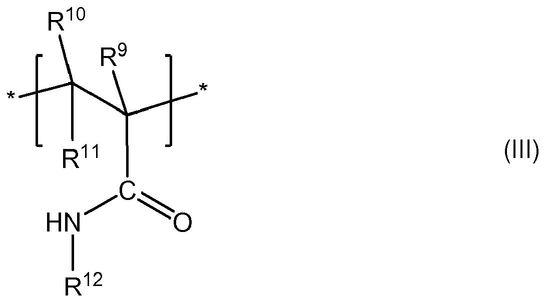
d) optional d Molanteile einer Teilstruktureinheit **S4** der Formel (IV) 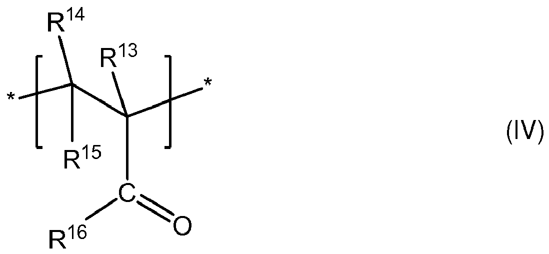 wobei
R¹, jeweils unabhängig voneinander, für -COOM, -SO₂-OM, -O-PO(OM)₂ und/oder -PO(OM)₂ steht,
R², R³, R⁵, R⁶, R⁹, R¹⁰, R¹³ und R¹⁴ jeweils unabhängig voneinander, für H oder eine Alkylgruppe mit 1 bis 5 Kohlenstoffatomen stehen,
R⁴, R⁷, R¹¹ und R¹⁵, jeweils unabhängig voneinander, für H, -COOM oder eine Alkylgruppe mit 1 bis 5 Kohlenstoffatomen stehen,
M, unabhängig voneinander, H⁺, ein Alkalimetallion, ein Erdalkalimetallion, ein zwei oder dreiwertiges Metallion, ein Ammoniumion, eine organische Ammoniumgruppe,
m = 0, 1 oder 2 ist, p = 0 oder 1 ist,
R⁸ und R¹², jeweils unabhängig voneinander, für eine C₁- bis C₂₀-Alkylgruppe, -Cycloalkylgruppe, -Alkylarylgruppe oder für eine Gruppe der Formel -[AO]ₙ-R^{a} steht, wobei A = C₂- bis C₄-Alkylen, R^{a} für H, eine C₁- bis C₂₀-Alkylgruppe, -Cyclohexylgruppe oder -Alkylarylgruppe steht, und n = 2 - 250,
R¹⁶, unabhängig voneinander, für NH₂, -NR^{b}R^{c}, -OR^{d}NR^{e}R^{f} stehen, wobei R^{b} und R^{c}, unabhängig voneinander, für eine C₁- bis C₂₀-Alkylgruppe, -Cycloalkylgruppe -Alkylaryl¬gruppe oder -Arylgruppe stehen,
oder für eine Hydroxyalkylgruppe oder für eine Acetoxyethyl- (CH₃-CO-O-CH₂-CH₂-) oder eine Hydroxyisopropyl- (HO-CH(CH₃)-CH₂-) oder eine Acetoxyisopropylgruppe (CH₃-CO-O-CH(CH₃)-CH₂-) stehen;
oder R^{b} und R^{c} bilden zusammen einen Ring, von dem der Stickstoff ein Teil ist, um einen Morpholin- oder Imidazolinring aufzubauen;
R^{d} eine C₂ -C₄-Alkylengruppe ist,
R^{e} und R^{f} je unabhängig voneinander eine C₁- bis C₂₀-Alkylgruppe, -Cycloalkylgruppe, -Alkylarygruppe, -Arylgruppe oder eine Hydroxyalkylgruppe darstellen,
und wobei a, b, c und d Molanteile der jeweiligen Teilstruktureinheiten **S1, S2, S3** und **S4** darstellen, mit
a/b/c/d = (0.1 - 0.9) / (0.1 - 0.9) / (0 - 0.8) / (0 - 0.8), insbesondere a/b/c/d = (0.3 - 0.9) / (0.1 - 0.7) / (0 - 0.6) / (0 - 0.4), bevorzugt a/b/c/d = (0.4 - 0.7) / (0.3 - 0.6) / (0.001 - 0.005) / 0 und mit der Massgabe dass a + b + c + d = 1 ist.

8. Verwendung nach Anspruch 7, **dadurch gekennzeichnet, dass** R¹ = COOM ist; R² und R⁵, unabhängig voneinander, für H, -CH₃ oder Mischungen daraus stehen; R³ und R⁶, unabhängig voneinander, für H oder -CH₃, bevorzugt für H, stehen; R⁴ und R⁷, unabhängig voneinander, für H oder -COOM, bevorzugt für H, stehen.

9. Verwendung nach wenigstens einem der Ansprüche 7 - 8, **dadurch gekennzeichnet, dass** R⁸ für -[AO]ₙ-R^{a} steht, A = C₂-Alkylen ist und R^{a} für H oder eine C₁-Alkylgruppe steht, und wobei n = 2 - 30, insbesondere n = 5 - 23, bevorzugt n = 8 - 22, im Speziellen n = 10 - 15 ist.

10. Verwendung nach wenigstens einem der Ansprüche 7 - 9, **dadurch gekennzeichnet, dass** m = 0 und p = 1 ist sowie R² und R⁵ jeweils für Mischungen aus 40 - 60 Mol-% H und 40 - 60 Mol-% -CH₃ stehen.

11. Verwendung nach wenigstens einem der Ansprüche 1 - 10, **dadurch gekennzeichnet, dass** das Kammpolymer mit einem Anteil von 0.01 - 10 Gew.-%, insbesondere 0.1 - 7 Gew.-% oder 0.2 - 5 Gew.-%,bezogen auf den Bindemittelgehalt, eingesetzt wird.

12. Verwendung nach wenigstens einem der Ansprüche 1 - 11, **dadurch gekennzeichnet, dass** es sich bei der mineralischen Bindemittelzusammensetzung um eine Mörtel- oder Betonzusammensetzung handelt, insbesondere um selbstverdichtenden Beton.

13. Verwendung nach wenigstens einem der Ansprüche 1 - 12, **dadurch gekennzeichnet, dass** die mineralische Bindemittelzusammensetzung Mehlkorn, bevorzugt mit einem Anteil > 350 kg/m³, insbesondere 400 - 600 kg/m³, enthält.

14. Selbstverdichtender Beton, enthaltend mindestens ein wie in einem der vorstehenden Ansprüche beschriebenes Kammpolymer.

15. Formkörper, erhältlich durch Aushärten eines selbstverdichtenden Betons nach Anspruch 14 nach Zugabe von Wasser.
